# EUROPÄISCHE PATENTSCHRIFT

(11) **EP 1 420 522 B1**
(45) Veröffentlichungstag und Bekanntmachung des Hinweises auf die Patenterteilung: **13.08.2008**
(21) Anmeldenummer: 02405983.4
(22) Anmeldetag: 15.11.2002
(51) Int. Cl.: H04B 3/54

(54) **Konfigurationssystem für Netzwerkgeräte und Verfahren zum Rekonfigurieren von Geräten**
Configuration system for network device and method for reconfiguring devices
Système de configuration de dispositifs de réseau et procédé de reconfiguration de dispositifs

(43) Veröffentlichungstag der Anmeldung: 19.05.2004
(73) Patentinhaber: ABB Research Ltd., 8050 Zürich (CH)
(72) Erfinder: Deck, Bernhard, 79809 Weilheim (DE); Crevatin, Mario, 8409 Winterthur (CH); Körbächer, Catherine, 5405 Baden-Dättwil (CH); Züger, Hans-Peter, 5212 Hausen (CH); Rudolf, Paul, 5234 Villigen (CH)
(74) Vertreter: ABB Patent Attorneys

(56) Entgegenhaltungen:
- EP-A- 0 911 777
- WO-A-02/071644
- DE-C- 19 850 050

## Beschreibung

### Technisches Gebiet

Die Erfindung ist auf ein Konfigurationssystem zum Konfigurieren von Geräten in Netzwerken und ein Verfahren zum Rekonfigurieren solcher Geräte gerichtet. Insbesondere kann das Verfahren im Bereich der Unterstationstechnik Anwendung finden.

### Stand der Technik

Die Zahl der weltweit vorhandenen Netzwerke mit konfigurierbaren Geräten steigt kontinuierlich an. Solche Geräte finden sich in unterschiedlichsten Einsatzbereichen, beispielsweise im Bereich von Datenverarbeitungsnetzwerken in Büroumgebungen, im Bereich der Telekommunikation und im Bereich von Unterstationstechniken, wie Techniken der Elektrizitäts-, Wasser- oder Gasverteilung. Allen diesen Netzen ist gemein, daß intelligente elektronische Geräte, die Funktionen schalten oder Funktionen beziehungsweise Zustände überwachen, durch Kommunikationsnetzwerke miteinander und mit Kontrollinstanzen verbunden sind. Gerade im Bereich von Großanlagen sind diese Netze über ein großes Gebiet verteilt, beispielsweise im gesamten Einzugsgebiet eines bestimmten Stromversorgers. Die zum Einsatz kommenden intelligenten elektronischen Geräte weisen im allgemeinen eine Konfiguration auf, die ihrem dortigen Einsatzzweck entspricht. Unter einer Konfiguration ist hierbei die Summe aller Einstellungen eines Geräts zu verstehen, die sein Verhalten, das heißt seine Zustände in bezug auf die Umwelt, bestimmen beziehungsweise beeinflussen. Die zum Einsatz kommenden intelligenten elektronischen Geräte sind meistens Universalgeräte, die für unterschiedlichste Einsatzzwecke verwendet werden können und daher beliebig konfigurierbar sind. Dies geschieht zumeist mit Hilfe eines Steuerprogramms, das auf Hardwareports zugreifen kann, welche dann beispielsweise Schalter oder Sensoren in vorgegebener Weise bedienen, beeinflussen, auslesen etc. können. Bei sich ändernden Bedingungen für den Betrieb der Geräte können diese rekonfiguriert werden. Dies geschieht üblicherweise entweder durch die Herstellerfirmen der Geräte oder durch Wartungsunternehmen, die sich auf solche Geräte spezialisiert haben.

Konfigurierungen von Geräten werden derzeit ausschließlich vor Ort vorgenommen, das heißt unmittelbar am zu rekonfigurierenden Gerät. Dies hat seinen Grund darin, daß die Konfiguratoren in aller Regel nicht hinreichend Kenntnis über Bauart, Modell oder aktuelle Konfiguration eines zu rekonfigurierenden Geräts haben und daher darauf angewiesen sind, zunächst eine aktuelle, mithin funktionsfähige Konfiguration festzustellen, bevor entsprechend angepaßte Änderungen an der Konfiguration, welche die Funktionsfähigkeit des Geräts nicht außer Kraft setzen, durchgeführt werden können. Dieses Verfahren ist arbeitsaufwendig und erfordert häufig lange Anreisezeiten und damit hohe Personalkosten für die Wartungstechniker vor Ort. Es wäre wünschenswert, und ist daher Aufgabe der vorliegenden Erfindung, eine Rekonfiguration der Geräte auch über dasjenige Netzwerk vornehmen zu können, mit dem diese Geräte ohnedies verbunden sind, ohne daß eine vor-Ort-Rekonfiguration durchgeführt werden muß.

WO 02 071 644 beschreibt eine Vorrichtung und ein Verfahren zum Suchen, Setzen und Ändern von Geräte- und Bereichsadressen über ein Stromversorgungsnetzwerk. Um Daten zu Senden und zu Empfangen sind Koppler vorgesehen, die die Signalübertragungsgeräte (PLC devices) mit dem Stromversorgungsnetzwerk verbinden. Vor der Vergabe neuer Adressen erfolgt eine Kontrolle zur Sicherstellung, dass die Adressen nur einmal vergeben sind. Mit dem beschriebenen Verfahren lassen sich lediglich Geräte- und Bereichsadressen von Geräten ändern.

EP 0 911 777 offenbart ein Verfahren um in einem elektrischen System mittels Steuerorganen Konfigurationen zu wählen, Eingangs- und Ausgangs-Gruppenbefehle zu wählen, elektrische Vorrichtungen gruppenweise zu schalten und diese Schaltungen anschliessend zu validieren.

In DE 1.98 50 050 Cl wird ein adaptives Verfahren zur Übertragung von Daten beschrieben, bei dem die Kanalqualität berücksichtigt wird. Dazu werden die Übertragungseigenscliatten eines Kanals bestimmt und aufgrund dieser Eigenschaften adaptiv unterschiedliche Modulationsarten ausgewählt.

### Darstellung der Erfindung

Diese Aufgabe wird gelöst durch die Bereitstellung eines Konfigurationssystems gemäß dem unabhängigen Patentanspruch 1 sowie das Verfahren zum Umkonfigurieren von Geräten gemäß dem unabhängigen Patentanspruch 8. Weitere vorteilhafte Ausgestaltungen, Aspekte und Details der vorliegenden Erfindungen ergeben sich aus den abhängigen Patentansprüchen und der Beschreibung.

Die Erfindung ist zunächst auf ein Konfigurationssystem zur Konfigurierung von Geräten in Netzwerken gerichtet mit zumindest einem zu konfigurierenden Gerät mit Elementen, die in einer spezifischen Weise konfiguriert sind und Konfigurationsmitteln zum Neukonfigurieren des Geräts an Hand einer empfangenen Neukonfigurationsinformation; und ein Konfigurationsserver, der mit dem zumindest einen zu konfigurierenden Gerät über ein Netzwerk verbunden ist, und der aufweist Kompositionsmittel zum Erstellen einer neuen Konfigurationsinformation für das zu konfigurierende Gerät und Mittel zum Feststellen der aktuellen Konfiguration des zumindest einen zu konfigurierenden Geräts.

Das zu konfigurierende Gerät kann hierbei jegliches konfigurierbare Gerät sein, welche über nach außen wirkende Schaltzustände verfügt, beispielsweise spezielle intelligente elektronische Geräte in der Steuerungs- und Anlagentechnik oder Datenverarbeitungsanlagen mit eingebauter Steuerungsfunktionalität etc. Die Elemente, welche konfiguriert werden können, stellen die Hardware- und Softwarekomponenten dar, welche dem Gerät die nach außen wirkenden Eigenschaften vermitteln. Dies können beispielsweise Schalter, Sensoren, Aktoren, aber auch interne Softwareobjekte wie Logging-Programme oder Zeitablaufsteuerungen sein.

In einer bevorzugten Ausführungsform der Erfindung beschreibt die aktuelle Konfigurationsinformation nicht nur eine Konfiguration von softwaremäßig und/oder ferngesteuert konfigurierbaren Elementen, sondern beinhaltet auch Konfigurationsinformation betreffend Elemente, die nur durch manuellen Eingriff konfigurierbar sind. Solche Elemente sind beispielsweise Hardwarekomponenten von Leitgeräten und insbesondere Primärgeräte, die durch das zu konfigurierende Gerät gesteuert werden. Solche Elemente können nicht automatisch aufgrund der neuen Konfigurationsinformation umkonfiguriert werden; die neue Konfigurationsinformation wiederspiegelt deshalb bezüglich solcher Elemente die aktuelle Konfiguration.

Das zu konfigurierende Gerät weist erfindungsgemäß zumindest ein Konfigurationsmittel auf, welches die eigentliche Konfiguration erzeugen kann. Im Sinne der vorliegenden Erfindung wird unterschieden zwischen Konfiguration einerseits und Konfigurationsinformation andererseits. Die Konfiguration ist, wie oben definiert, die Gesamtheit der Zustände des Geräts, die eine sich nach außen entfaltende Wirkung zeigen. Eine Konfigurationsinformation ist demgegenüber eine kodierte Information, beispielsweise eine Textdatei, welche in einer bestimmten Formatierung aufbereitet, eine Konfiguration des Gerätes repräsentiert. Im Bereich der Unterstationstechnik von Energieerzeugungsunternehmen kann eine solche Konfigurationsinformation beispielsweise als SCL-Datei (Substation Configuration Language) vorliegen. Das Konfigurationsmittel erzeugt durch Einrichten entsprechender Software- und/oder Hardwarekomponenten des zu konfigurierenden Geräts an Hand der Konfigurationsinformation die dann tatsächlich im Gerät vorliegende Konfiguration. Das Einrichten von Hardwarekomponenten geschieht z.B. durch konfigurieren logischer Verknüpfungen in einem FPGA (Field Programmable Gate Array) einem PLA (programmierbares logisches Feld) oder einem CPLD (Complex Programmable Logic Device).

Auf der anderen Seite des Konfigurationssystems, und mit dem zu konfigurierenden Gerät über das Netzwerk verbunden, befindet sich der Konfigurationsserver. Dies kann ein beliebig positionierter und damit auch räumlich entfernter Rechner etc. sein, mit dessen Hilfe die Konfiguration des zu konfigurierenden Geräts verändert werden kann, ohne daß sich Wartungspersonal zum zu konfigurierenden Gerät begeben muß. Dieser verfügt über zwei integrierte Mittel oder "Prozessoren", nämlich zum einen über ein Mittel zum Feststellen der aktuellen Konfiguration und zum anderen über ein Kompositionsmittel. Das Mittel zum Feststellen der aktuellen Konfiguration ist ein Kernpunkt der vorliegenden Erfindung, da nur basierend auf der aktuellen Konfiguration gewährleistet werden kann, daß die Neukonfigurierung des zu konfigurierenden Geräts korrekt durchgeführt wird, und das zu konfigurierende Gerät mithin auch nach der Neukonfigurierung funktionsfähig erhalten wird. Das Kompositionsmittel dient dazu, eine neue, mit dem zu konfigurierenden Gerät kompatible, Konfigurationsinformation zu erstellen, welche diesem über das Netzwerk geschickt werden kann. Empfangen und Versenden der aktuellen und neuen Konfigurationsinformationen erfolgt über die Standardkomponenten des Netzwerks.

Vorzugsweise enthält das zu konfigurierende Gerät ein Mittel zum Bereitstellen einer aktuellen Konfigurationsinformation.

Es stehen verschiedene Möglichkeiten zur Implementierung dieses Mittels zum Bereitstellen einer aktuellen Konfigurationsinformation zur Verfügung. In einem einfachen Fall verfügt das Mittel über einen Speicher, in dem die aktuelle Konfigurationsinformation gespeichert ist. Dieser Speicher kann beispielsweise auch von dem Konfigurationsmittel verwendet werden, um die darin befindlichen Informationen zur Konfigurierung des Geräts zu verwenden. Durch einfaches Auslesen des Speichers erfolgt somit die Bereitstellung der Konfigurationsinformation, welche dann über das Netzwerk dem Konfigurationsserver zugesandt werden kann.

Alternativ kann das Mittel zum Bereitstellen der Konfigurationsinformation auch ein auf einer CPU laufendes Programmobjekt zum Feststellen der Konfiguration der Elemente des zu konfigurierenden Geräts sein und zum Erstellen einer Konfigurationsinformation dienen. Bei dieser Ausführungsform kann das Mittel über geeignete und im Gerät implementierte Mechanismen die gesamte Konfiguration des Geräts bestimmen und dann ad hoc eine Konfigurationsinformation, beispielsweise eine entsprechend geeignete SCL-Datei generieren. Bei dieser Variante ist kein zusätzlicher Speicher notwendig, und es ist gewährleistet, daß stets die aktuell im Gerät eingestellte Konfiguration als Konfigurationsinformation an den Konfigurationsserver geschickt wird.

Auf der Konfigurationsserverseite steht ein Mittel zum Feststellen der aktuellen Konfiguration bereit. In einer einfachen Ausführungsform kann dies ein Speicher sein, in dem die aktuelle Konfigurationsinformation über zumindest das zu konfigurierende Gerät gespeichert ist und der diese bereitstellen kann. Diese Speicherung kann abhängig von einer auf dem zu konfigurierenden Gerät erstellten Konfigurationsinformation sein, oder sie kann unabhängig davon existieren. Sofern sichergestellt ist, daß die im Speicher enthaltene Konfigurationsinformation tatsächlich die aktuelle Konfiguration wiedergibt, ist es nicht notwendig, auf das Mittel zur Erstellung einer aktuellen Konfigurationsinformation zurückzugreifen. Dies kann unter den gegebenen Voraussetzungen daher auch fortgelassen werden.

Für die Erfindung ist es wichtig, daß eine Möglichkeit vorgesehen ist, dem Konfigurationsserver die tatsächliche und aktuelle Konfiguration des zu konfigurierenden Geräts bekanntzumachen. Nur auf diese Weise läßt sich sicherstellen, daß die neu zu erstellende Konfiguration mit der bisherigen kompatibel ist und das zu konfigurierende Gerät funktionsfähig bleibt.

Das Kompositionsmittel weist vorzugsweise ein auf einer CPU laufendes Programmobjekt zum Feststellen der Konfiguration des zu konfigurierenden Geräts und zum Erstellen einer neuen Konfigurationsinformation an Hand der Konfigurationsinformation über das zu konfigurierende Gerät auf.

Das Kompositionsmittel ist so beschaffen, daß es die aktuelle Konfigurationsinformation als Basis für die Erstellung der neuen Konfigurationsinformation verwendet. Hierdurch kann die Kompatibilität der neuen Konfigurationsinformation mit dem zu konfigurierenden Gerät sichergestellt werden.

Das zu konfigurierende Gerät ist vorzugsweise ein Unterstationsgerät oder eine Unterstation, beispielsweise eine Unterstation der Energieverteilungstechnik.

Die Erfindung ist ebenfalls auf ein Verfahren zum Rekonfigurieren von Geräten in einem Netzwerk von Geräten und Konfigurationsservern gerichtet. Alles bezüglich des Konfigurationsservers gemäß der Erfindung Gesagte gilt auch für das erfindungsgemäße Verfahren, so daß auf das Obenstehende verwiesen und vollinhaltlich Bezug genommen wird. Gleichermaßen gilt das im folgenden bezüglich des Verfahrens Gesagte auch für den Konfigurationsserver. Das erfindungsgemäße Verfahren weist folgende Schritte auf:
- Feststellen der aktuellen Konfiguration des zu rekonfigurierenden Geräts;
- Erstellen einer für das Gerät geeigneten neuen Konfigurationsinformation, welche veränderten Anforderungen an das Gerät genügt, an Hand der aktuellen Konfiguration und der Anforderungen;
- Übersenden der neuen Konfigurationsinformation an das zu konfigurierende Gerät; und
- Neukonfigurieren des Geräts an Hand der neuen Konfigurationsinformation.

Bei diesem erfindungsgemäßen Verfahren werden mithin Informationen, die aktuell im Gerät befindliche Konfiguration und Anforderungen an eine neue Konfiguration miteinander verknüpft und so prozessiert, daß eine funktionsfähige neue Konfigurationsinformation zur Konfiguration des Geräts dienen kann. Ein erster wichtiger Schritt des Verfahrens ist das Feststellen der aktuellen Konfiguration. In einem einfachen Ausführungsbeispiel der Erfindung kann das Feststellen der aktuellen Konfigurationsinformation in einem einfachen Auslesen eines Speichers liegen, der die aktuelle Konfigurationsinformation auf dem Konfigurationsserver enthält. Bei diesem Beispiel für das erfindungsgemäße Verfahren ist in diesem Schritt noch kein Kontakt zum zu konfigurierenden Gerät notwendig. Diese Variante des erfindungsgemäßen Verfahrens ist nur dann möglich, wenn sichergestellt werden kann, daß die aktuelle Konfiguration auf dem zu konfigurierenden Gerät durch die auf dem Konfigurationsserver liegende Konfigurationsinformation korrekt und vollständig repräsentiert wird. In solchen Fällen muß daher seitens der Betreiber der Geräte und des Konfigurationssystems sichergestellt werden, daß
1. Die Identität des Geräts feststeht, damit es nicht zu Verwechslungen kommt,
2. keine vor-Ort-Änderungen der Konfiguration des Geräts vorgenommen sind, die dem Konfigurationsserver nicht bekannt gemacht worden sind, und
3. Änderungen an der Konfiguration, die durch den Konfigurationsserver vorgenommen worden sind, stets zu entsprechenden Änderungen der Konfigurationsinformation im Speicher des Konfigurationsservers geführt haben.

Gerade in der heutigen Praxis der Unterstationsleittechnik kann dies häufig nicht sichergestellt werden. An Betreiber verkaufte Geräte entziehen sich zumeist der weiteren Kontrolle durch den Hersteller. Sollen solche Geräte später durch den Hersteller rekonfiguriert werden, ist es häufig nicht möglich, mehr als eine Adreßinformation des Geräts zu bekommen, die seine IP-Adresse (oder andere Netzwerkadresse) wiedergibt. Der Konfigurator, beispielsweise der Hersteller des Gerätes oder ein Wartungsunternehmen, kann daher in der Regel nicht davon ausgehen, ein bestimmtes Gerät unter einer bestimmten Adresse im Netz aufzufinden. Daher wird es bevorzugt, daß das Feststellen der aktuellen Konfiguration erfindungsgemäß folgende Schritte aufweist:
- Abfragen einer Identifikationsbezeichnung bei dem zu konfigurierenden Gerät;
- Abfragen einer Konfigurationsänderungsinformation bei dem zu konfigurierenden Gerät;
- falls die Konfigurationsänderungsinformation zeigt, daß die Konfiguration des zu konfigurierenden Geräts nicht verändert ist und damit die Konfigurationsinformation auf dem Konfigurationsserver der aktuellen Konfiguration des zu konfigurierenden Geräts entspricht:
   Auslesen der auf dem Konfigurationsserver gespeicherten Konfigurationsinformation an Hand der Identifikationsbezeichnung; oder
- falls die Konfigurationsänderungsinformation zeigt, daß die Konfiguration des zu konfigurierenden Geräts verändert ist und damit die Konfigurationsinformation auf dem Konfigurationsserver der aktuellen Konfiguration des zu konfigurierenden Geräts nicht entspricht:
   Auslesen einer auf dem zu konfigurierenden Gerät gespeicherten aktuellen Konfigurationsinformation.

Die Identifikationsbezeichnung des zu konfigurierenden Geräts dient seiner eindeutigen Identifizierung unter allen existierenden Geräten. Auf diese Weise können Verwechslungen zwischen ähnlich erscheinenden Geräten ausgeschlossen werden. In dieser Ausführungsform der vorliegenden Erfindung wird zunächst überprüft, ob die Konfiguration des Geräts sich möglicherweise geändert hat. Hierunter ist zu verstehen, daß eine Änderung an der Konfiguration des Geräts vorgenommen wurde, seit die zum damaligen Zeitpunkt aktuelle Konfigurationsinformation in den Speicher des Konfigurationsservers eingespeist worden ist. Dies kann in der Praxis beispielsweise dadurch realisiert werden, daß nach Auslesen der aktuellen Konfigurationsinformation und dem Speichern im Konfigurationsserver die Konfigurationsänderungsinformation auf einen bestimmten Wert gesetzt wird. Dieser entspricht dann der Information, daß die Konfiguration nicht geändert wurde und damit die Konfigurationsinformation auf dem Konfigurationsserver aktuell ist. Wenn Änderungen am Gerät und seiner Konfiguration vorgenommen wurden, setzt die Software des Geräts die Konfigurationsänderungsinformation automatisch auf einen zweiten Wert der dann dem Konfigurationsserver anzeigt, daß eine Änderung vorgenommen worden ist, und die Konfigurationsinformation im Speicher des Konfigurationsservers nicht mehr die aktuelle Konfiguration des zu konfigurierenden Geräts widerspiegelt. Erst in diesem Fall wird vom zu konfigurierenden Gerät eine aktuelle Konfigurationsinformation angefordert. Diese Variante des erfindungsgemäßen Verfahrens reduziert gerade bei stark belasteten Netzen oder in Netzwerken mit einer nur geringen Bandbreite die Menge der zu übertragenden Daten und kann damit zu einer Entlastung des Netzwerks beitragen.

Eine weitere Möglichkeit zur Realisierung dieses Verfahrensschritts besteht darin, einfach in jedem Fall die aktuelle Konfigurationsinformation vom zu konfigurierenden Gerät abzufragen, wobei zu dieser Konfigurationsinformation auch eine Identifikationsbezeichnung gehören kann, allerdings nicht unbedingt muß.

Diese Variante ist besonders einfach zu implementieren und stellt bei heutigen Übertragungsleistungen üblicher Netzwerke die voraussichtlich beste Variante dar und ist daher insbesondere bevorzugt.

Das Erstellen einer neuen Konfigurationsinformation kann folgende Schritte aufweisen:
- Feststellen der gewünschten neuen Konfiguration des zu konfigurierenden Geräts;
- Vergleichen der durch die gewünschte neue Konfiguration notwendigen Anforderungen an das zu konfigurierende Geräts mit tatsächlich vorhandenen Konfigurationsmöglichkeiten des Geräts anhand der aktuellen Konfigurationsinformation; und
- Generieren einer neuen Konfigurationsinformation, welche die gewünschte neue Konfiguration in möglichst gute Übereinstimmung mit den Konfigurationsmöglichkeiten des Geräts bringt; oder
- Feststellen einer Kompatibilität zwischen gewünschter neuer Konfiguration und den Konfigurationsmöglichkeiten des Geräts und Generieren einer neuen Konfigurationsinformation anhand der gewünschten Konfiguration; oder
- Feststellen der Inkompatibilität zwischen gewünschter neuer Konfiguration und den Konfigurationsmöglichkeiten des Geräts; und Ausgeben einer Warnung.

Die gewünschte neue Konfiguration ist hierbei eine Meta-Information, welche beispielsweise mit einem abstrakt arbeitenden Planungswerkzeug erhalten wurde und die angibt, welche Konfiguration das Gerät aufweisen sollte, um die gewünschte neue Funktionalität erfüllen zu können.

Unter den Konfigurationsmöglichkeiten eines Geräts ist im Sinne der vorliegenden Erfindung die Gesamtheit aller möglichen Konfigurationen des gesamten Geräts beziehungsweise seiner einzelnen Elemente zu verstehen. In der Energieversorgungstechnik als Leitgeräte eingesetzte moderne intelligente elektronische Geräte sind weitgehend frei programmierbar. Jedoch existieren Einschränkungen der Konfigurierbarkeit aufgrund von physikalischen und softwaretechnischen Grenzen der Leitgeräte und der von ihnen gesteuerten Primärgeräte, so daß nicht alle Konfigurationen sinnvoll sind. So ist beispielsweise ein Gerät, das über eine bestimmte Anzahl von Ausgängen zum Schalten von Leitungen verfügt, nicht in der Lage, mehr als genau diese Zahl an Leitungen schalten zu können. Auch können nicht mehr Sensoren des Geräts auf Leitungen geschaltet werden, als Sensoren im Gerät vorhanden sind. Auch die Schaltgeschwindigkeit oder die Art der von einem Gerät ausgewerteten Informationen können limitierend für die Gesamtfähigkeit eines Geräts sein. Die Konfigurationsmöglichkeiten können darüber hinaus im Hinblick auf eine zu verändernde Konfiguration auch von Notwendigkeiten bestimmt sein, die im Kontext betrachtet werden müssen. So kann es sein, daß bestimmte Konfigurationsmöglichkeiten zwar grundsätzlich vorhanden sind, jedoch in der gegebenen Umgebung des Geräts nicht realisiert werden können, da dann in möglicherweise sicherheitsgefährdender Weise aktuell konfigurierte Funktionen des Geräts ausfallen würden. So kann beispielsweise das Gerät eine Schutzfunktion implementieren, die umprogrammiert werden soll, um bei einer veränderten Kenngröße anzusprechen. Hierbei muß gewährleistet sein, daß die neu programmierte Schutzfunktion nicht die Möglichkeiten des Geräts übersteigt. Ein weiteres Beispiel kann die Änderung in der Stromstärke sein, die durch eine bestimmte Leitung fließen darf. Hier muß bei der Rekonfigurierung sichergestellt sein, daß die vorgesehene Stromstärke nicht die Belastungsgrenze des die Leitung schaltenden Schalters überschreitet.

Die genannten Einschränkungen der Konfigurierbarkeit sind in der aktuellen Konfigurationsinformation explizit enthalten oder lassen sich aus ihr bestimmen. Explizit vorhanden sind beispielsweise eine Anzahl von Ein/Ausgabe-Schnittstellen oder Parameter von Schutz- und Steuerfunktionen. Implizit vorhanden sind beispielsweise Bedingungen für ein Verriegelungsverfahren, welche anhand einer Topologie von Sammelschienen und Schaltern bestimmbar sind.

Die Feststellung der Konfigurationsmöglichkeiten des zu konfigurierenden Geräts erfolgt an Hand der aktuellen Konfigurationsinformation, welche wie oben beschrieben bestimmt worden ist. Diese bilden die Basis für die Begutachtung der weitergehenden Rekonfigurierbarkeit des Geräts.

Bezüglich des eigentlichen Generierens der neuen Konfigurationsinformation stehen verschiedene Möglichkeiten offen. Der anspruchsvollste Ansatz besteht darin, eine Konfigurationsinformation zu generieren, welche sowohl die Anforderungen der gewünschten neuen Konfiguration als auch die sich ergebenden Notwendigkeiten an Hand der aktuellen Konfiguration berücksichtigt. In dieser Variante wird beispielsweise ein Expertensystem zur Konfiguration eingesetzt, welches die erwähnten Einschränkungen der Konfigurierbarkeit als fixe Randbedingungen annimmt und nur die Konfiguration der ferngesteuert konfigurierbaren Elemente ändert. In einer einfacheren Variante kann die Kompatibilität, das heißt Verträglichkeit, der gewünschten neuen und vom System unabhängig erzeugten Konfiguration überprüft werden und bei einem positiven Ergebnis die Konfigurationsinformation generiert werden bzw. beim Feststellen einer Inkompatibilität die Generierung abgebrochen oder gar nicht erst aufgenommen werden und es kann ggfs. eine Warnung ausgegeben werden. Aufgrund dieser Information ist dann ein Wartungstechniker o.ä. in der Lage, die gewünschte Konfiguration anzupassen und erneut das erfindungsgemäße Verfahren durchführen zu lassen.

Es ist auch möglich, zusätzlich zu der Warnung weitere Informationen über die konkreten Ursachen der Inkompatibilität mit auszugeben, um dem Wartungstechniker Anregungen für Änderungen an die Hand zu geben.

### Kurze Beschreibung der Zeichnungen

Im folgenden wird der Erfindungsgegenstand anhand eines bevorzugten Ausführungsbeispiels, welches in der beiliegenden Zeichnung dargestellt ist, näher erläutert. Es zeigt:

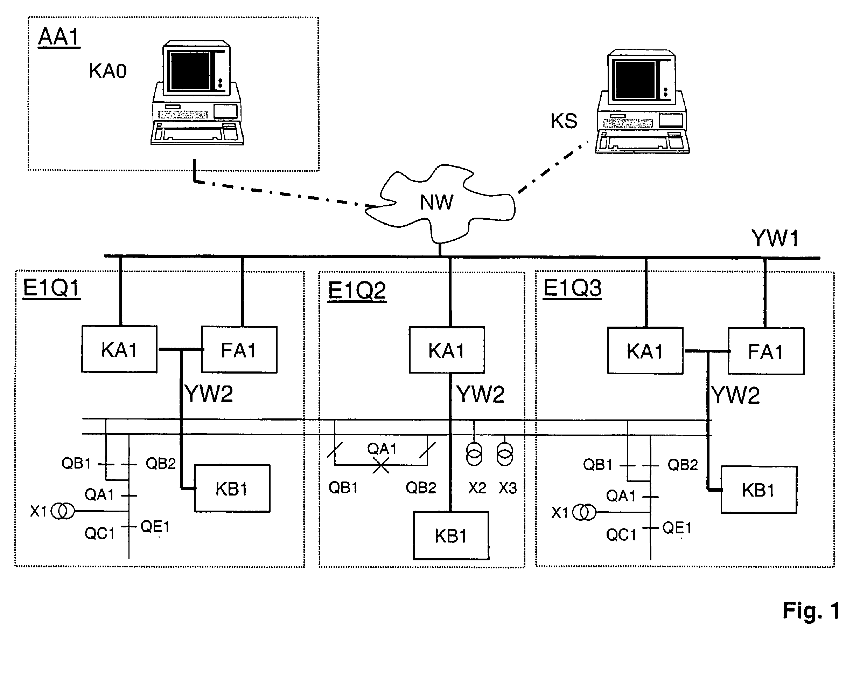

- Figur 1: eine schematische Darstellung einer Schaltanlage und eines zugeordneten Leitsystems.

Die in der Zeichnung verwendeten Bezugszeichen und deren Bedeutung sind in der Bezugszeichenliste zusammengefasst aufgelistet.

### Wege zur Ausführung der Erfindung

Figur 1 zeigt eine schematische Darstellung einer Schaltanlage oder Unterstation eines elektrischen Energieverteilnetzes und eines zugeordneten Leitsystems. Die Darstellung zeigt drei Felder E1Q1, E1Q2 und E1Q3 einer Schaltanlage und eine Bedienstation AA1 mit einem Datenverarbeitungsgerät KA0 mit üblichen Ein- und Ausgabemitteln zur Bedienung durch einen Benutzer. Die Bedienstation AA1 ist in der Unterstation selber angeordnet oder entfernt in einer Bedienzentrale eines Netzbetreibers angeordnet und über ein Kommunikationsnetzwerk NW mit einem übergeordneten Bus YW1 der Unterstation verbunden. Ein entfernter Konfigurations-Server ist ebenfalls über das Kommunikationsnetzwerk NW und den übergeordneten Bus YW1 mit Leitgeräten der Anlage kommunikationsmässig verbunden. Die einzelnen Felder E1Q1, E1Q2 und E1Q3 weisen jeweils Leitgeräte auf, welche Steuergeräte KA1, Schutzgeräte FA1 oder Ein-/Ausgabegeräte KB1 sind. Die Leitgeräte steuern, regeln, überwachen und schützen zugeordnete Primärgeräte der Anlage, welche den eigentlichen Anlagenzweck erfüllen. Primärgeräte sind beispielsweise Leistungsschalter, Trenner, Freileitungen, Transformatoren, Generatoren oder Motoren.

Auf den Leitgeräten sind Leitsystemfunktionen zur Steuerung und Überwachung der Primärgeräte installiert. Die Leitgeräte sind durch Kommunikationsmittel, im Beispiel durch den übergeordneten Bus YW1 und durch Prozessbusse YW2 miteinander verbunden. Den Leitsystemfunktionen sind Primärgeräte wie beispielsweise Schalter QA1, Trenner QB1,QB2 und Spannungsgeber respektive Spannungsmessgeräte X1, X2, X3 zugeordnet. Die Primärgeräte sind durch leistungsführende elektrische Verbindungen miteinander verbunden, also z.B. über Sammelschienen, Feldknoten und Leitungsabgänge. Diese Verbindungen sind als Topologie der Primärgeräte beschreibbar.

Die Bezeichnungen KA1, FA1, KB1, YW1, etc. bezeichnen reale Geräte und Leitsystemfunktionen einer Anlage. Um ein bestimmtes Gerät eindeutig zu bezeichnen, wird ihm die Bezeichnung des Feldes vorangestellt. So bezeichnet beispielsweise E1Q1QA1 einen Schalter QA1 des Feldes E1Q1.

Es soll nun beispielsweise das Steuergerät KA1 des Feldes E1Q1 mit neuer oder aufdatierter Steuerungssoftware ausgerüstet werden. Diese Software wird durch den Hersteller des Steuergerätes konfiguriert, das heißt, es werden geeignete Softwaremodule parametriert und miteinander kombiniert. Diese Konfiguration muss mit dem tatsächlichen Aufbau der Unterstation und insbesondere des Feldes E1Q1 übereinstimmen. Diese Übereinstimmung muss in verschiedenen Bereichen vorliegen:
- Adressen von Geräten an den verschiedenen Kommunikationsbussen YW1, YW2,
- Adressen von Ein/Ausgabeschnittstellen,
- Speicher- und Rechenkapazität des Feldgeräts,
- Art der Steuerfunktion, Anforderungen an die Steuerfunktion,
- Art und Parameter des oder der gesteuerten Primärgeräte, und
- Topologie der Primärgeräte

Es kann geschehen, das ein Anlagenbetreiber Änderungen an der Anlage in den oben genannten Bereichen vornimmt und die Leitgeräte dem entsprechend umkonfiguriert, ohne dass der Hersteller der Leitgeräte davon Kenntnis erhält. Beispielsweise kann eine Leistungskapazität eines Abgangs verändert werden, oder es kann die Anlagentopologie durch den Einbau neuer Elemente wie Schalter oder Trenner oder Abgänge verändert werden. Entsprechend werden Steuer- und Schutzfunktionen in den Leitgeräten angepasst. Falls der Hersteller die Software gemäss veralteten Konfigurationsinformationen erstellt und somit die Übereinstimmung fehlerhaft ist, ist das Steuergerät nach dem Laden der neuen Software entweder gar nicht funktionsfähig, oder aber die Funktionsweise ist falsch oder gewährleistet nicht eine geforderte Sicherheit.

Erfindungsgemäss wird deshalb eine aktuelle Konfigurationsinformation ermittelt und dem Konfigurations-Server KS übermittelt. In einer bevorzugten Variante der Erfindung beinhaltet die aktuelle Konfigurationsinformation eine Beschreibung der Primärgeräte, die für das zu konfigurierende Leitgerät von Belang ist, und ihrer Topologie. Diese Beschreibung betrifft beispielsweise Primärgeräte eines Schaltfeldes, dem das Leitgerät zugeordnet ist, oder Primärgeräte an einer bestimmten Sammelschiene, oder Primärgeräte der ganzen Unterstation. Die Beschreibung beinhaltet, je nach Art des Primärgerätes, beispielsweise zulässige Maximalwerte für Spannung, Strom und Leistung, Schaltzeiten, Informationen zu Messkreisen, d.h. Art und Parameter von Messwandlern und Sensoren, Typ eines Leistungsschalters oder Trenners, Konfiguration der Erdung, Schaltplan, Eigenschaften von Gasdichtesensoren, Näherungsschaltern, etc.

Im Konfigurations-Server KS wird mit einem Kompositionsmittel eine neue Konfigurationsinformation bestimmt. Die neue Konfigurationsinformation entspricht neuen Programmeinheiten für den Betrieb des Steuergerätes. Diese Programmeinheiten sind mit der aktuellen Konfigurationsinformation konsistent, das heißt, dass sie im Steuergerät ladbar und korrekt ausführbar sind. Die Programmeinheiten sind Programme für Mikroprozessoren und/oder Programme für programmierbare logische Bausteine wie FPGAs (Field Programmable Gate Arrays). Die Programmeinheiten werden über das Kommunikationsnetzwerk NW und den übergeordneten Bus YW1 dem Steuergerät übermittelt und in diesem in einen Programmspeicher respektive FPGA geladen.

In einer bevorzugten Variante der Erfindung wird zusätzlich oder alternativ eine aufdatierte Beschreibung von Gerätefunktionen und Geräteschnittstellen in SCL dem Steuergerät übermittelt und zu seiner Konfiguration verwendet.

### Bezugszeichenliste

- QA1: Schalter
- QB1: Trenner
- X1, X2, X3: Spannungsgeber
- YW1: übergeordneter Bus
- YW2: Prozessbus
- KA1: Steuergerät
- FA1: Schutzgerät
- KB1: Ein-/Ausgabegerät
- KS: Konfigurations-Server
- NW: Kommunikationsnetzwerk

## Patentansprüche

1. Rekonfigurationssystem zur Rekonfigurierung von Geräten angeordnet in Spannungsnetzwerken mit
zumindest einem zu rekonfigurierenden Gerät (KA1, KB1, KF1) mit Elementen, die in einer spezifischen Weise konfiguriert sind und
einem Konfigurations-Server (KS), der mit dem zumindest einen zu rekonfigurierenden Gerät (KA1, KB1, KF1) über ein Kommunikationsnetzwerk (NW) verbunden ist und der aufweist Kompositionsmittel zum Erstellen einer neuen Konfigurationsinformation für das zu rekonfigurierende Gerät (KA1, KB1, KF1) und Mittel zum Feststellen der aktuellen Konfiguration des zumindest einen zu rekonfigurierenden Geräts (KA1, KB1, KF1), wobei die Konfiguration die Gesamtheit der Zustände des Geräts, die eine sich nach außen entfaltende Wirkung zeigen, definiert und wobei die Konfigurationsinformation in kodierter Form eine Konfiguration des Geräts repräsentiert
wobei
- Konfigurationsmittel vorhanden sind zum Neukonfigurieren des zu rekonfigurierenden Geräts (KA1, KB1, KF1) anhand einer empfangenen neuen Konfigurationsinformation, welche veränderten Anforderungen an das Gerät (KA1, KB1, KF1) genügt.
- und das zu rekonfigurierende Gerät (KA1, KB1, KF1) ein Unterstations-Gerät oder eine Unterstation der Eriergieverteilungstechnik ist.

2. Rekonfigurationssystem nach Anspruch 1, **dadurch gekennzeichnet, daß** die aktuelle Konfiguration eine Beschreibung von Primärgeräten (QA1, QB1, QB2, QC1, QE1, X1, X2, X3), welche dem zu rekonfigurierenden Gerät (KA1, KB1, KF1) zugeordnet sind, aufweist.

3. Rekonfigurationssystem nach Anspruch 1 oder 2, **dadurch gekennzeichnet, daß** das zu rekonfigurierende Gerät (KA1. KB1, KF1) weiter aufweist ein Mittel zum Bereitstellen einer aktuellen Konfigurationsinformation.

4. Rekonfigurationssystem nach Anspruch 3, **dadurch gekennzeichnet, daß** das Mittel zum Bereitstellen der Konfigurationsinformation einen Speicher zum Speichern der Konfigurationsinformation aufweist.

5. Rekonfigurationssystem nach einem der Ansprüche 3 bis 4, **dadurch gekennzeichnet, daß** das Mittel zum Bereitstellen der Konfigurationsinformation ein auf einer CPU laufende Programmobjekt zum Feststellen der Konfiguration der Elemente des zu rekonfigurierenden Geräts (KA1, KB1, KF1), und zum Erstellen einer Konfigurationsinformation ist.

6. Rekonfigurationssystem nach einem der Ansprüche 1 bis 5, **dadurch gekennzeichnet, daß** das Mittel zum Feststellen der aktuellen Konfiguration einen Speicher zum Speichern von Konfigurationsinformationen über zumindest das zu rekonfigurierende Gerät (KA1, KB1, KF1) aufweist.

7. Rekonfigurationssystem nach einem der Ansprüche 1 bis 6, **dadurch gekennzeichnet, daß** die Kompositionsmittel aufweisen ein auf einer CPU laufendes Programmobjekt zum Feststellen der Konfiguration des zu rekonfigurierenden Geräts (KA1, KB1, KF1) und zum Erstellen einer neuen Konfigurationsinformation anhand der Konfigurationsinformation über das zu rekonfigurierende Gerät (KA1. KB1, KF1).

8. Rekonfigurationssystem nach Anspruch 1 bis 7. **dadurch gekennzeichnet, dass** das zu rekonfigurierenden Gerät ein Leitgerät der Energieversorgungstechnik ist und Primargeräte (QA1, QB1, QB2, QC1, QE1, X1, X2, X3) steuert.

9. Rekonfigurationssystem nach Anspruch 8, **dadurch gekennzeichnet, dass** die Primärgeräte Schalter (QA1), Trenner (QB1, QB2), Freileitungen, Transformatoren, Generatoren, Motoren, Spannungsgeber oder Spannungsmessgeräte (X1, X2, X3) sind.

10. Rekonfigurationssystem nach Anspruch 1 bis 9, **dadurch gekennzeichnet, dass** Möglichkeiten das Gerät zu rekonfigurieren die Gesamtheit aller möglichen Rekonfigurationen des gesamten Gerätes beziehungsweise seiner einzelnen Elemente umfasst.

11. Rekonfigurationssystem nach Anspruch 10, **dadurch gekennzeichnet, dass** die Rekonfigurierbarkeit eingeschränkt ist durch eine explizite Anzahl von Ein/Ausgabeschnittstellen oder Parameter von Schutz- und Steueifunktionen und/ oder die Konfiguration implizit eingeschränkt sind durch Bedingungen für ein Vorriegelungsverfahren, welche anhand einer Topologie von Sammelschienen und Schaltern bestimmbar sind.

12. Verfahren zum Rekonfigurieren von Geräten (KA1, KB1, KF1) in einem Netzwerk von Geräten und Konfigurations-Servern (KS) mit folgenden Schritten:
- Feststellen einer aktuellen Konfiguration des zu rekonfigurierenden Geräts (KA1, KB1, KF1);
- Übersenden einer neuen Konfigurationsinformation an das zu rekonfigurierende Gerät (KA1, KB1, KF1); wobei die Konfiguration die Gesamtheit der Zustände des Geräts, die eine sich nach außen entfaltende Wirkung zeigen, definiert und wobei die Konfigurationsinformation in kodierter Form eine Konfiguration des Geräts repräsentiert und
- Neukonfigurieren des Geräts (KA1, KB1, KF1) anhand der neuen Konfigurationsinformation,
wobei
- eine für das Gerät (KA1, KB1, KF1) geeignete neue Konfigurationsinformation, welche veränderten Anforderungen an das Gerät (KA1, KB1. KF1) genügt, anhand der aktuellen Konfiguration und der Anforderungen erstellt wird.

13. Verfahren nach Anspruch 12, **dadurch gekennzeichnet, dass** die aktuelle Konfiguration eine Beschreibung von Primärgeräten (QA1, QB1, QB2, QC1, QE1, X1, X2, X3), welche dem zu rekonfigurierenden Gerät (KA1, KB1, KF1) zugeordnet sind, aufweist

14. Verfahren nach Anspruch 12 oder 13, **dadurch gekennzeichnet, daß** das Feststellen der aktuellen Konfiguration durch Auslesen einer auf dem Konfigurations-Server (KS) gespeicherten aktuellen Konfigurationsinformation geschieht.

15. Verfahren nach Anspruch 12 bis 14, **dadurch gekennzeichnet, daß** das Feststellen der aktuellen Konfiguration folgende Schritte aufweist:
- Abfragen einer ldentifikationsbezeichnung bei dem zu rekonfigurierenden Gerät (KA1. KB1, KF1);
- Abfragen einer Konfigurationsänderungs-Information bei dem zu rekonfigurierenden Gerät (KA1, KB1, KF1);
falls die Konfigurationsänderungs-Information zeigt, daß die Konfiguration des zu rekonfigurierenden Geräts (KA1, KB1, KF1) nicht verändert ist und damit die Konfigurationsinformation auf dem Konfigurations-Server (KS) der aktuellen Konfiguration des zu rekonfigurierenden Geräts (KA1, KB1, KF1) entspricht:
- Auslesen der auf dem Konfigurations-Server (KS) gespeicherten aktuellen Konfigurationsinformation anhand der ldentifikationsbezeichnung;
oder falls die Konfigurationsänderungs-Information zeigt, daß die Konfiguration des zu rekonfigurierenden Geräts (KA1. KB1, KF1) verändert ist und damit die Konfigurationsinformation auf dem Konfigurations-Server (KS) der aktuellen Konfiguration des zu rekonfigurierenden Geräts (KA1, KB1, KF1) nicht entspricht:
- Auslesen einer auf dem zu rekonfigurierenden Gerät (KA1, KB1, KF1) gespeicherten aktuellen Konfigurationsinformation.

16. Verfahren nach Anspruch 12 bis 14, **dadurch gekennzeichnet, daß** das Feststellen der aktuellen Konfiguration folgende Schritte aufweist:
- Auslesen einer auf dem zu rekonfigurierenden Gerät (KA1, KB1, KF1) gespeicherten Konfigurations-Information über die aktuelle Konfiguration.

17. Verfahren nach einem der Ansprüche 12 bis 16, **dadurch gekennzeichnet, daß** das Erstellen einer neuen Konfigurations-Information folgende Schritte aufweist:
- Feststellen der gewünschten neuen Konfiguration des zu rekonfigurierenden Geräts (KA1, KB1, KF1);
- Vergleichen der durch die gewünschte neue Konfiguration notwendigen Anforderungen an das zu rekonfigurierende Gerät (KA1, KB1, KF1) mit tatsächlich vorhandenen Konfigurationsmöglichkeiten des Geräts (KA1, KB1, KF1) anhand der aktuellen Konfigurationsinformation; und
- Generieren einer neuen Konfigurationsinformation, welche die gewünschte neue Konfiguration in möglichst gute Übereinstimmung mit den Konfigurationsmöglichkeiten des Geräts bringt (KA1, KB1, KF1); oder
- Feststellen einer Kompatibilität zwischen gewünschter neuer Konfiguration und den Konfigurationsmöglichkeiten des Geräts (KA1, KB1. KF1) und Generieren einer neuen Konfigurationsinformation anhand der gewünschten Konfiguration; oder
- Feststellen einer Inkompatibilität zwischen gewünschter neuer Konfiguration und den Konfigurationsmöglichkeiten des Geräts (KA1, KB1, KF1) und Ausgeben einer Warnung.

## Claims

1. Reconfiguration system for reconfiguration of appliances arranged in voltage networks having
at least one appliance (KA1, KB1, KF1) to be reconfigured and having elements which are configured in a specific manner, and
a configuration server (KS), which is connected via a communication network (NW) to the at least one appliance (KA1, KB1, KF1) to be reconfigured and which has composition means for creation of new configuration information for the appliance (KA1, KB1, KF1) to be reconfigured and means for definition of the present configuration of the at least one appliance (KA1, KB1, KF1) to be reconfigured, with the configuration defining the totality of the states of the appliance which exhibit an external effect, and with the configuration information representing a configuration of the appliance in coded form, in which
- configuration means are provided for reconfiguration of the appliance (KA1, KB1, KF1) to be reconfigured, on the basis of new received configuration information which satisfies the requirements for the appliance (KA1, KB1, KF1),
- and the appliance (KA1, KB1, KF1) to be reconfigured is a substration appliance or a power distribution substration.

2. Reconfiguration system according to Claim 1, **characterized in that** the present configuration has a description of primary appliances (QA1, QB1, QB2, QC1, QE1, X1, X2, X3) which are associated with the appliance (KA1, KB1, KF1) to be reconfigured.

3. Reconfiguration system according to Claim 1 or 2, **characterized in that** the appliance (KA1, KB1, KF1) to be configured also has a means for provision of up-to-date configuration information.

4. Reconfiguration system according to Claim 3, **characterized in that** the means for provision of the configuration information has a memory for storage of the configuration information.

5. Reconfiguration system according to one of Claims 3 or 4, **characterized in that** the means for provision of the configuration information is a program object, which runs on a CPU, for definition of the configuration of the elements of the appliance (KA1, KB1, KF1) to be reconfigured, and for creation of configuration information.

6. Reconfiguration system according to one of Claims 1 to 5, **characterized in that** the means for definition of the present configuration has a memory for storage of configuration information at least about the appliance (KA1, KB1, KF1) to be reconfigured.

7. Reconfiguration system according to one of Claims 1 to 6, **characterized in that** the composition means have a program object, which runs on a CPU, for definition of the configuration of the appliance (KA1, KB1, KF1) to be reconfigured and for creation of new configuration information on the basis of the configuration information about the appliance (KA1, KB1, KF1) to be reconfigured.

8. Reconfiguration system according to one of Claims 1 to 7, **characterized in that** the appliance to be reconfigured is a control unit for power supply technology and controls primary appliances (QA1, QB1, QC1, QE1, X1, X2, X3).

9. Reconfiguration system according to Claim 8, **characterized in that** the primary appliances are the switch (QA1), isolators (QB1, QB2), overhead lights, transformers, generators, motors, voltage sensors or voltage measurement appliances (X1, X2, X3) .

10. Reconfiguration system according to Claim 1 to 9, **characterized in that** the options for reconfiguration of the appliance cover the totality of all possible reconfigurations of the entire appliance and/or of its individual elements.

11. Reconfiguration system according to Claim 10, **characterized in that** the reconfigurability is restricted by an explicit number of input/output interfaces or parameters of protective and control functions, and/or the configuration is implicitly restricted by conditions for a locking method, which can be defined on the basis of the topology of busbars and switches.

12. Method for reconfiguration of appliances (KA1, KB1, KF1) in a network of appliances and configuration servers (KS), having the following steps:
- definition of the actual configuration of the appliance to be reconfigured (KA1, KB1, KF1);
- transmission of new configuration information to the appliance (KA1, KB1, KF1) to be reconfigured; with the configuration defining the totality of the states of the appliance which exhibit an external effect, and with the configuration information representing a configuration of the appliance in coded form, and
- reconfiguration of the appliance (KA1, KB1, KF1) on the basis of the new configuration information,
with
- new configuration information which is suitable for the appliance (KA1, KB1, KF1) and complies with amended requirements for the appliance (KA1, KB1, KF1) being created on the basis of the actual configuration and the requirements.

13. Method according to Claim 12, **characterized in that** the present configuration has a description of primary appliances (QA1, QB1, QB2, QC1, QE1, X1, X2, X3) which are associated with the appliance (KA1, KB1, KF1) to be reconfigured.

14. Method according to Claim 12 or 13, **characterized in that** the present configuration is defined by reading up-to-date configuration information which is stored on the configuration server (KS).

15. Method according to Claims 12 to 14, **characterized in that** the definition of the present configuration comprises the following steps:
- checking an identification designation for the appliance (KA1, KB1, KF1) to be reconfigured;
- checking configuration change information for the appliance (KA1, KB1, KF1) to be reconfigured;
if the configuration change information indicates that the configuration of the appliance (KA1, KB1, KF1) to be reconfigured has not changed, and that the configuration information on the configuration server (KS) thus corresponds to the present configuration of the appliance (KA1, KB1, KF1) to be reconfigured:
- reading of the up-to-date configuration information, which is stored on the configuration server (KS), on the basis of the identification designation;
or, if the configuration change information indicates that the configuration of the appliance (KA1, KB1, KF1) to be reconfigured has changed, and thus that the configuration information on the configuration server (KS) does not correspond to the present configuration of the appliance (KA1, KB1, KF1) to be reconfigured:
- reading up-to-date configuration information which is stored on the appliance (KA1, KB1, KF1) to be reconfigured.

16. Method according to Claims 12 to 14, **characterized in that** the definition of the present configuration comprises the following steps:
- reading of configuration information, which is stored on the appliance (KA1, KB1, KF1) to be reconfigured, about the present configuration.

17. Method according to one of Claims 12 to 16, **characterized in that** the creation of new configuration information comprises the following steps:
- definition of the desired new configuration of the appliance (KA1, KB1, KF1) to be reconfigured;
- comparison of the requirements needed by the desired new configuration for the appliance (KA1, KB1, KF1) to be reconfigured with the actually available configuration capabilities of the appliance (KA1, KB1, KF1) on the basis of the up-to-date configuration information; and
- generation of new configuration information, which makes the desired new configuration match as well as possible the configuration capabilities of the appliance (KA1, KB1, KF1); or
- definition of any compatibility between the desired new configuration and the configuration capabilities of the appliance (KA1, KB1, KF1), and generation of new configuration information on the basis of the desired configuration; or
- definition of any incompatibility between the desired new configuration and the configuration capabilities of the appliance (KA1, KB1, KF1) and emission of a warning.

## Revendications

1. Système de reconfiguration pour reconfigurer des appareils disposés dans des réseaux électriques, comprenant au moins un appareil à reconfigurer (KA1, KB1, KF1) avec des éléments qui sont configurés d'une manière spécifique et un serveur de configuration (KS) qui est relié avec l'au moins un appareil à reconfigurer (KA1, KB1, KF1) par le biais d'un réseau de communication (NW) et qui présente des moyens de composition pour créer une nouvelle information de configuration pour l'appareil à reconfigurer (KA1, KB1, KF1) ainsi que des moyens pour déterminer la configuration actuelle de l'au moins un appareil à reconfigurer (KA1, KB1, KF1), la configuration définissant l'ensemble des états de l'appareil qui indiquent un effet qui se déploie vers l'extérieur et l'information de configuration représentant une configuration de l'appareil sous une forme codée, des moyens de configuration étant présents pour effectuer une nouvelle configuration de l'appareil à reconfigurer (KA1, KB1, KF1) au moyen d'une nouvelle information de configuration reçue, laquelle satisfait aux exigences modifiées imposées à l'appareil (KA1, KB1, KF1) et l'appareil à reconfigurer (KA1, KB1, KF1) étant un appareil de sous-station ou une sous-station de la technique de distribution d'énergie.

2. Système de reconfiguration selon la revendication 1, **caractérisé en ce que** la configuration actuelle présente une description des appareils primaires (QA1, QB1, QB2, QC1, QE1, X1, X2, X3) qui sont associés à l'appareil à reconfigurer (KA1, KB1, KF1) .

3. Système de reconfiguration selon la revendication 1 ou 2, **caractérisé en ce que** l'appareil à reconfigurer (KA1, KB1, KF1) présente en plus un moyen pour fournir une information de configuration actuelle.

4. Système de reconfiguration selon la revendication 3, **caractérisé en ce que** le moyen pour fournir l'information de configuration présente une mémoire pour enregistrer l'information de configuration.

5. Système de reconfiguration selon l'une des revendications 3 à 4, **caractérisé en ce que** le moyen pour fournir l'information de configuration est un objet programme exécuté sur une UC pour déterminer la configuration des éléments de l'appareil à reconfigurer (KA1, KB1, KF1) et pour créer une information de configuration.

6. Système de reconfiguration selon l'une des revendications 1 à 5, **caractérisé en ce que** le moyen pour déterminer la configuration actuelle présente une mémoire pour enregistrer les informations de configuration au moins sur l'appareil à reconfigurer (KA1, KB1, KF1) .

7. Système de reconfiguration selon l'une des revendications 1 à 6, **caractérisé en ce que** les moyens de composition présentent un objet programme exécuté sur une UC pour déterminer la configuration de l'appareil à reconfigurer (KA1, KB1, KF1) et pour créer une nouvelle information de configuration au moyen de l'information de configuration sur l'appareil à reconfigurer (KA1, KB1, KF1).

8. Système de reconfiguration selon l'une des revendications 1 à 7, **caractérisé en ce que** l'appareil à reconfigurer est un appareil de conduite de la technique de distribution d'énergie et il commande des appareils primaires (QA1, QB1, QB2, QC1, QE1, X1, X2, X3) .

9. Système de reconfiguration selon la revendication 8, **caractérisé en ce que** les appareils primaires sont un commutateur (QA1), des sectionneurs (QB1, QB2), des câbles aériens, des transformateurs, des générateurs, des moteurs, des codeurs de tension ou des appareils de mesure de tension (X1, X2, X3).

10. Système de reconfiguration selon l'une des revendications 1 à 9, **caractérisé en ce que** les possibilités de reconfigurer l'appareil incluent l'ensemble de toutes les reconfigurations possibles de la totalité de l'appareil ou de ses éléments individuels.

11. Système de reconfiguration selon la revendication 10, **caractérisé en ce que** l'aptitude à la reconfiguration est limitée par un nombre explicite d'interfaces d'entrée/sortie ou de paramètres de fonctions de protection et de commande et/ou la configuration est implicitement limitée par les conditions d'une procédure de verrouillage qui peuvent être déterminées au moyen d'une topologie de barres collectrices et de commutateurs.

12. Procédé pour reconfigurer des appareils (KA1, KB1, KF1) dans un réseau constitué d'appareils et de serveurs de configuration (KS) comprenant les étapes suivantes :
- Détermination d'une configuration actuelle de l'appareil à reconfigurer (KA1, KB1, KF1) ;
- Envoi d'une nouvelle information de configuration à l'appareil à reconfigurer (KA1, KB1, KF1), la configuration définissant l'ensemble des états de l'appareil qui indiquent un effet qui se déploie vers l'extérieur et l'information de configuration représentant une configuration de l'appareil sous une forme codée ; et
- Nouvelle configuration de l'appareil (KA1, KB1, KF1) au moyen de la nouvelle information de configuration, une nouvelle information de configuration appropriée pour l'appareil (KA1, KB1, KF1), laquelle satisfait aux exigences modifiées imposées à l'appareil (KA1, KB1, KF1), étant créée au moyen de la configuration actuelle et des exigences.

13. Procédé selon la revendication 12, **caractérisé en ce que** la configuration actuelle présente une description des appareils primaires (QA1, QB1, QB2, QC1, QE1, X1, X2, X3) qui sont associés à l'appareil à reconfigurer (KA1, KB1, KF1).

14. Procédé selon la revendication 12 ou 13,
**caractérisé en ce que** la détermination de la configuration actuelle s'effectue par une lecture d'une information de configuration actuelle enregistrée sur le serveur de configuration (KS).

15. Procédé selon les revendications 12 à 14,
**caractérisé en ce que** la détermination de la configuration actuelle présente les étapes suivantes :
- Interrogation d'une désignation d'identification auprès de l'appareil à reconfigurer (KA1, KB1, KF1) ;
- Interrogation d'une information de modification de la configuration auprès de l'appareil à reconfigurer (KA1, KB1, KF1) ;
si l'information de modification de la configuration indique que la configuration de l'appareil à reconfigurer (KA1, KB1, KF1) n'est pas modifiée et par conséquent que l'information de configuration sur le serveur de configuration (KS) correspond à la configuration actuelle de l'appareil à reconfigurer (KA1, KB1, KF1) :
- Lecture de l'information de configuration actuelle enregistrée sur le serveur de configuration (KS) au moyen d'une désignation d'identification ;
ou si l'information de modification de la configuration indique que la configuration de l'appareil à reconfigurer (KA1, KB1, KF1) a été modifiée et par conséquent que l'information de configuration sur le serveur de configuration (KS) ne correspond pas à la configuration actuelle de l'appareil à reconfigurer (KA1, KB1, KF1) :
- Lecture d'une information de configuration actuelle enregistrée sur l'appareil à reconfigurer (KA1, KB1, KF1) .

16. Procédé selon les revendications 12 à 14,
**caractérisé en ce que** la détermination de la configuration actuelle présente les étapes suivantes :
- Lecture d'une information de configuration sur la configuration actuelle enregistrée sur l'appareil à reconfigurer (KA1, KB1, KF1).

17. Procédé selon l'une des revendications 12 à 16, **caractérisé en ce que** la création d'une nouvelle information de configuration présente les étapes suivantes :
- Détermination de la nouvelle configuration souhaitée de l'appareil à reconfigurer (KA1, KB1, KF1) ;
- Comparaison des exigences imposées à l'appareil à reconfigurer (KA1, KB1, KF1) en raison de la nouvelle configuration souhaitée avec les possibilités de configuration effectivement existantes de l'appareil (KA1, KB1, KF1) au moyen de l'information de configuration actuelle ; et
- Génération d'une nouvelle information de configuration qui établit la meilleure concordance possible entre la nouvelle configuration souhaitée et les possibilités de configuration de l'appareil (KA1, KB1, KF1) ; ou
- Détermination d'une compatibilité entre la nouvelle configuration souhaitée et les possibilités de configuration de l'appareil (KA1, KB1, KF1) et génération d'une nouvelle information de configuration au moyen de la configuration souhaitée ; ou
- Détermination d'une incompatibilité entre la nouvelle configuration souhaitée et les possibilités de configuration de l'appareil (KA1, KB1, KF1) et émission d'une alerte.
